# EUROPÄISCHE PATENTANMELDUNG

(11) **EP 2 428 537 A1**
(43) Veröffentlichungstag der Anmeldung: **14.03.2012**
(21) Anmeldenummer: 10176346.4
(22) Anmeldetag: 13.09.2010
(51) Int. Cl.: C09D 163/00

(54) **Abdichtungsmembran mit verbesserter Haftung**

(71) Anmelder: Sika Technology AG, 6340 Baar (CH)
(72) Erfinder: Rudolf, Jean-Claude, 6012, Obernau (CH)
(74) Vertreter: Sika Patent Attorneys

(57) **Zusammenfassung**

Die vorliegende Erfindung betrifft eine Abdichtungsmembran umfassend eine thermoplastische Schottschicht sowie eine klebfreie Epoxid-Festharz-Schicht, welche sich zum Abdichten von Untergründen im Baubereich eignet. Weiter betrifft die Erfindung ein Verfahren zum Abdichten erwähnter Untergründe. Dieses Verfahren erlaubt eine schnelle und effiziente Abdichtung von Gebilden des Hoch- und Tiefbaus sowie eine gute Haftung der Abdichtungsmembran auf dem Untergrund.

## Beschreibung

### Technisches Gebiet

Die Erfindung betrifft das Gebiet der Abdichtung von Untergründen, insbesondere im Baubereich.

### Stand der Technik

Untergründe, welche gegen Wasser abgedichtet werden müssen, insbesondere Betonstrukturen, finden sich viele im Hoch- und Tiefbau. Derartige Untergründe werden typischerweise durch Bitumenbahnen oder Kunststoffbahnen in Kombination mit Bitumen abgedichtet. Aufgrund des thermoplastischen Verhaltens sind Bitumenbahnen jedoch anfällig auf Temperaturschwankungen. Elastische Kunststoffbahnen hingegen weisen ein über einen breiten Temperaturbereich konstantes elastisches Verhalten auf und erfüllen somit ihre Funktion als Abdichtung auch unter extremen Temperaturbedingungen. Im Falle einer Kunststoffbahnen in Kombination mit Bitumen stellt sich jedoch das Problem, dass ein guter Haftverbund zwischen der Kunststoffbahn in Kombination mit Bitumen mit dem Untergrund vorhanden sein muss, was natürlich die Haftungen aller Zwischenschichten mit umfasst. Insbesondere die Haftung und Verträglichkeit zwischen Kunststofffolie und Bitumen stellt hierbei ein aufgrund der beteiligten Materialien ein sehr schwierig zu lösendes Problem dar.

Dieses System weist weiter den grossen Nachteil auf, dass für das vollständige Schmelzen eine grosse Wärmeleistung erbracht werden muss, was typischerweise den Einsatz einer offenen Flamme erfordert. Dies ist einerseits kostspielig und andererseits kann die schwer kontrollierbare und hohe Wärmeleistung einer solchen offenen Flamme zu Schwelbränden führen. Weiterhin bedingt dieses System, dass nach dem Schmelzen des Bitumens im Falle der Verwendung einer Kunststoffbahn unmittelbar danach die Kunststoffbahn aufgebracht werden muss, was ein vorgängiges Positionieren der Kunststoffbahn verunmöglicht. Weiter ist ein Begehen des Untergrunds nach dem Schmelzen des Bitumens vor dem Aufbringen des Dichtmaterials nicht möglich.

### Darstellung der Erfindung

Die Aufgabe der vorliegenden Erfindung ist es daher, eine Abdichtungsmembran zur Verfügung zustellen, welche die Nachteile des Standes der Technik nicht aufweist, insbesondere einfach und rationell erstellt und aufgebracht werden kann und zu einem guten Haftverbund zwischen Abdichtungsmembran und Untergrund führt. Ferner soll eine hohe Wasserdichtheit gewährleistet werden.

Überraschenderweise zeigte sich, dass mit einer Abdichtungsmembran dieses Problem gelöst werden kann. Eine derartigere Abdichtungsmembran erlaubt es, auf schnelle und kosteneffiziente Art und Weise einen Untergrund, insbesondere eine Betonstruktur, abzudichten.

Kernpunkt der vorliegenden Erfindung ist die Kombination einer thermoplastischen Schottschicht und einer klebfreien Epoxid-Festharz-Schicht als wesentliche Bestandeile einer Abdichtungsmembran.

Es zeigte sich weiterhin, dass mit den bevorzugten Ausführungsformen ein wesentliches Problem des Standes der Technik, nämlich ein gleichmässiges und kontrolliertes Aufbringen vom Haftmittel Bitumen, einfach vermieden werden kann, und so die Qualitätssicherung beim Erstellen einer Abdichtung einfach gesteigert werden kann.

Ein weiterer grosser Vorteil hierbei liegt, dass das notwendige Haftmittel in einem industriellen Prozess auf der thermoplastischen Schottschicht kontrolliert verteilt und fixiert werden kann und dass diese thermoplastischen Schottschicht mit Haftmittel, nämlich einer klebfreien Epoxid-Festharz-Schicht, vorkonfektioniert auf der Baustelle zum Einsatz gebracht werden kann. Insbesondere ist es vorteilhaft, dass auf die Verwendung eines Gussbitumens verzichtet werden kann.

Weiter sind solche Abdichtungsmembranen nicht auf bitumenverträgliche Schottschichtmaterialien angewiesen. Unter "bitumenverträglichem Kunststoff" wird in diesem Dokument typischerweise Kunststoff verstanden, in welchen Bitumen nur wenig oder gar nicht eindringt oder auch Kunststoff, der frei von Weichmachern ist. Weichmacher können in den Bitumen migrieren, wodurch der Kunststoff verspröden oder sonst in seinen Eigenschaften beeinträchtigt werden kann. Das Eindringen von Bitumen in Kunststoff kann zu Verfärbung des Kunststoffs führen, was zum Beispiel bei einer sichtbaren Abdichtung als Nachteil von derartigen Abdichtungen gewertet wird. Die Verwendung einer klebfreien Epoxid-Festharz-Schicht erlaubt daher eine breitere Auswahl an Farben und Materialien der Schottschicht. Auch müssen Metalloberflächen, welche in Kontakt mit der klebfreien Epoxid-Festharz-Schicht kommen, nicht einer Vorbehandlung gegen Bitumenkorrosion, aufgrund aggressiver Säuren entstanden durch Oxidation des Bitumens, unterzogen werden. Weiter ist im Falle der klebfreien Epoxid-Festharz-Schicht die Migration von niedermolekularen Stoffen in die Schottschichtmaterialien gegenüber Bitumen geringer.

Ferner können solche Abdichtungsmembranen auch ohne offene Flamme auf einen Untergrund aufgebracht werden, was insbesondere ein sicherheitstechnischer Vorteil ist.

Ein weiterer grosser Vorteil ist aufgrund der klebfreien Epoxid-Festharz-Schicht die Möglichkeit, die Abdichtungsmembran vor dem Aufbringen auf dem Untergrund verschiebbar anzuordnen. An der passenden Stelle angebracht, kann danach durch Erwärmen der klebfreien Epoxid-Festharz-Schicht die Abdichtungsmembran mit dem Untergrund fest verbunden werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft in einem ersten Aspekt eine Abdichtungsmembran 1 umfassend
- eine thermoplastische Schottschicht 2, insbesondere enthaltend thermoplastische Polyolefine oder Polyvinylchlorid (PVC),
- sowie eine klebfreie Epoxid-Festharz-Schicht 3.

Um als thermoplastische Schottschicht möglichst geeignet zu sein, sollte sie möglichst wasserdicht sein und sich auch unter längerem Einfluss von Wasser, beziehungsweise Feuchtigkeit, nicht zersetzen oder mechanisch beschädigt werden. Als thermoplastische Schottschicht sind insbesondere derartige Folien geeignet, wie sie für Abdichtungszwecke im Hoch- und Tiefbau bereits im Stand der Technik eingesetzt werden. Um durch ein Erwärmen bei dem Aufbringen der Abdichtungsmembran auf einem Untergrund möglichst wenig geschädigt oder verändert zu werden, ist es besonderes vorteilhaft, wenn die thermoplastische Schottschicht aus einem Material mit einem Erweichungspunkt von über 110°C, bevorzugt zwischen 140 °C und 170°C, gefertigt sind. Die thermoplastische Schottschicht sollte vorteilhaft ein zumindest geringes Ausmass an Elastizität aufweisen, um beispielsweise durch Temperaturen verursachte Ausdehnungsunterschiede zwischen Abdichtungsmembran und Untergrund oder durch Risse im Untergrund verursachte Spannungen überbrücken zu können, ohne dass die thermoplastische Schottschicht beschädigt wird oder reisst und die Dichtfunktion der Schottschicht beieinträchtigen würde.

Besonders bevorzugt umfasst die thermoplastische Schottschicht 2 Materialien, welche ausgewählt sind aus der Gruppe bestehend aus Polyethylen mit hoher Dichte (HDPE), Polyethylen mit mittlerer Dichte (MDPE), Polyethylen mit tiefer Dichte (LDPE), Polyethylen (PE), Polypropylen (PP), Polyethylenterephthalat (PET), Polystyrol (PS), Polyvinylchlorid (PVC), Polyamide (PA), Ethylen-Vinylacetat (EVA), chlorsulfoniertes Polyethylen, thermoplastische Polyolefine (TPO), Ethylen-Propylen-Dien-Kautschuk (EPDM) und Polyisobutylen (PIB) sowie Mischungen davon.

Vorzugswiese besteht die thermoplastische Schottschicht zu mehr als 50 Gew.-%, insbesondere bevorzugt zu mehr als 80 Gew.-%, aus den vorgehend genannten Materialien.

Die thermoplastische Schottschicht weist vorteilhaft eine Schichtdicke im Millimeterbereich auf, typischerweise zwischen 0.2 und 15 mm, bevorzugt zwischen 0.5 und 4 mm.

Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxid-Festharze weisen die Formel (I) auf

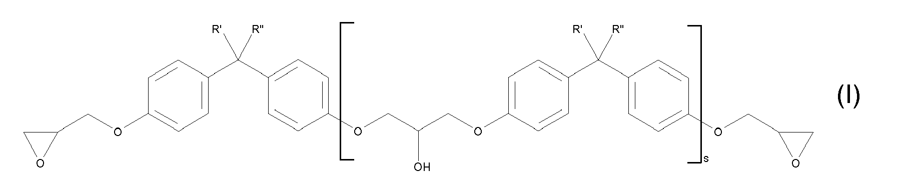

Hierbei stehen die Substituenten R' und R" unabhängig voneinander entweder für H oder CH₃. Weiterhin steht der Index s für einen Wert von > 1.5, insbesondere von 2 bis 12.

Derartige Epoxid-Festharze sind kommerziell erhältlich beispielsweise unter der Handelsreihennamen D.E.R.™ bzw. Araldite® bzw. Epikote von Dow bzw. Huntsman bzw. Hexion und dementsprechend dem Fachmann bestens bekannt.

Verbindungen der Formel (I) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxidharze im engeren Sinn, d.h. wo der Index s einen Wert von > 1.5 aufweist.

Es konnte unter anderem auch gezeigt werden, dass, wenn anstelle des Epoxid-Festharzes ein Epoxid-Flüssigharz verwendet wird, die Vorteile der vorliegenden Erfindung nicht auftreten. Somit ist es für das Wesen der vorliegenden Erfindung wesentlich, dass ein Epoxid-Festharz in der Haftzusammensetzung vorhanden ist.

Unter dem Begriff "klebfrei" im Zusammenhang mit der Epoxid-Festharz-Schicht 3 wird im ganzen vorliegenden Dokument eine Oberflächenklebrigkeit im Sinne einer Soforthaftung oder "Tack" verstanden, welche bei Raumtemperatur so gering ist, dass bei dem Drücken mit einem Daumen mit einem Druckaufwand von ca. 5 kg für 1 Sekunde auf die Oberfläche der Epoxid-Festharz-Schicht der Daumen nicht auf der Oberfläche der Epoxid-Festharz-Schicht kleben bleibt, respektive die Epoxid-Festharz-Schicht nicht aufgehoben werden kann.

Vorzugsweise weist die klebfreie Epoxid-Festharz-Schicht 3 einen Anteil von 1 - 20 Gew.-%, insbesondere 2- 12 Gew.-%, bevorzugt 4- 9 Gew.-%, an Epoxid-Festharzes auf, bezogen auf das Gesamtgewicht der klebfreie Epoxid-Festharz-Schicht.

Vorzugsweise ist das Epoxid-Festharz der klebfreien Epoxid-Festharz-Schicht 3 bei Raumtemperatur lagerstabil.

Es ist weiter vorteilhaft, wenn die klebfreie Epoxid-Festharz-Schicht 3 weiter ein bei Raumtemperatur festes thermoplastisches Polymer 4 aufweist.

Vorzugsweise weist die klebfreie Epoxid-Festharz-Schicht 3 einen Anteil von 40 - 90 Gew.-%, insbesondere 50- 80 Gew.-%, eines bei Raumtemperatur festen thermoplastischen Polymers 4 auf.

In diesem Dokument werden Erweichungstemperaturen oder Erweichungspunkte (Softening point) insbesondere als nach der Ring & KugelMethode gemäss DIN ISO 4625 gemessen verstanden.

Unter dem Begriff "Raumtemperatur" wird im vorliegenden Dokument eine Temperatur von 23°C verstanden.

Es ist sehr vorteilhaft, wenn das bei Raumtemperatur feste thermoplastische Polymer einen Erweichungspunkt im Bereich von 60°C bis 150 °C, insbesondere 80°C bis 150 °C, insbesondere bevorzugt von 90°C bis 130°C, aufweist.

Als bei Raumtemperatur feste thermoplastische Polymere werden insbesondere Homopolymere oder Copolymere von mindestens einem olefinisch ungesättigten Monomeren, insbesondere von Monomeren, welche ausgewählt sind aus der Gruppe bestehend aus Ethylen, Propylen, Butylen, Butadien, Isopren, Acrylonitril, Vinylester, insbesondere Vinylacetat, Vinylether, Allylether, (Meth)acrylsäure, (Meth)acrylsäureester, Maleinsäure, Maleinsäureanhydrid, Maleinsäureester, Fumarsäure, Fumarsäureester und Styrol, verstanden.

Besonders geeignet sind Copolymere, welche lediglich aus den Monomeren der soeben aufgeführten Gruppe hergestellt werden.

Weiterhin besonders geeignet sind durch Pfropfungsreaktion modifizierte Copolymere von olefinisch ungesättigten Monomeren, insbesondere die durch Pfropfungsreaktion modifizierte Copolymere des vorgehenden Abschnitts.

Als bei Raumtemperatur feste Thermoplaste gelten beispielsweise Polyolefine, insbesondere Poly-α-olefine. Meist bevorzugt derartige Polyolefine sind ataktische Poly-α-olefine (APAO).

Als meist bevorzugte thermoplastische Polymere gelten Ethylen/Vinylacetat-Copolymere (EVA), insbesondere solche mit einem Vinylacetat-Anteil von unter 50 Gew.-%, insbesondere mit einem Vinylacetat-Anteil zwischen 10 und 40 Gew.-%, bevorzugt zwischen 20 und 35 Gew.-%, meist bevorzugt zwischen 27 und 32 Gew.-%.

Es hat sich als besonders bevorzugt erwiesen, wenn mindestens zwei verschiedene bei Raumtemperatur feste thermoplastische Polymere verwendet werden, welche bevorzugt eine unterschiedliche chemische Zusammensetzung aufweisen. Meist bevorzugt ist eines dieser zwei verschiedenen thermoplastischen Polymere ein Ethylen/Vinylacetat-Copolymer.

Weiterhin ist es vorteilhaft, wenn das weitere thermoplastische Polymer ein Copolymer ist, bei dessen Herstellung Maleinsäure oder Maleinsäureanhydrid als Monomer oder als Pfropfungsreagenz eingesetzt wurde.

Das Gewichts-Verhältnis von Epoxid-Festharz zu bei Raumtemperatur festem thermoplastischen Polymer liegt vorzugsweise zwischen 1:2 und 1:10, bevorzugt zwischen 1:4 und 1:8.

Als besonders vorteilhaft hat sich erwiesen, wenn die klebfreie Epoxid-Festharz-Schicht 3 weiterhin ein chemisches oder physikalisches Treibmittel enthält.

Falls die klebfreie Epoxid-Festharz-Schicht ein chemisches oder physikalisches Treibmittel aufweist, wird beim Erwärmen das Treibmittel aktiviert und es wird insbesondere ein Gas freigesetzt.

Es kann sich hierbei um exotherme Treibmittel handeln, wie beispielsweise Azoverbindungungen, Hydrazinderivate, Semicarbazide oder Tetrazole handeln. Bevorzugt sind Azodicarbonamid und Oxy-bis-(Benzenesulfonyl-hydrazid), die bei der Zersetzung Energie freisetzen. Weiterhin geeignet sind auch endotherme Treibmittel, wie beispielsweise Natriumbicarbonat/Zitronensäure - Mischungen. Derartige chemische Treibmittel sind beispielsweise unter dem Namen Celogen™ der Firma Chemtura erhältlich. Ebenfalls geeignet sind physikalische Treib¬mittel, wie sie unter dem Handelsnamen Expancel™ der Firma Akzo Nobel vertrieben werden.

Besonders geeignete Treibmittel sind solche, wie sie unter dem Handelsnamen Expancel™ der Firma Akzo Nobel oder Celogen™ der Firma Chemtura erhältlich sind.

Bevorzugte Treibmittel sind chemische Treibmittel, welche beim Erhitzen, insbesondere auf eine Temperatur von 100 bis 160 °C, ein Gas freisetzen.

Die Menge des physikalischen oder chemischen Treibmittels liegt insbesondere im Bereich von 0.1 - 15 Gewichts-%, bezogen auf das Gewicht der klebfreien Epoxid-Festharz-Schicht.

Ferner kann es vorteilhaft sein, die klebfreie Epoxid-Festharz-Schicht bei der Herstellung teilweise vorzuschäumen. Dadurch kann beispielsweise bei einer Applikation auf einem Untergrund Energie bei der Erwärmung eingespart werden. Auch gleicht die klebfreie Epoxid-Festharz-Schicht dadurch im Bezug auf Dicke und haptischer Wahrnehmung einer Bitumenschicht, ist jedoch leichter.

Weiterhin kann die klebfreie Epoxid-Festharz-Schicht insbesondere Epoxid-Vernetzungskatalysatoren und/oder Härter für Epoxidharze, welcher durch erhöhte Temperatur aktiviert wird, enthalten. Insbesondere sind diese ausgewählt aus der Gruppe bestehend aus Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff (Diuron), N,N-Dimethylharnstoff, N-iso-Butyl-N',N'-dimethylharnstoff, 1,1'-(Hexan-1,6-diyl)bis(3,3'-dimethylharnstoff) sowie Imidazole, Imidazol-Salze, Imidazoline und Amin-Komplexe. Diese wärmeaktivierbare Härter sind vorzugsweise bei einer Temperatur von 80-160 °C, insbesondere von 85°C bis 150°C, bevorzugt von 90 - 140°C, aktivierbar. Insbesondere wird Dicyandiamid in Kombination mit einem substituierten Harnstoff eingesetzt.

Die klebfreie Epoxid-Festharz-Schicht kann zusätzlich bereits zu den erwähnten Bestandteilen auch noch weitere Bestandteile enthalten, beispielsweise Biozide, Stabilisatoren, insbesondere Wärmestabilisatoren, Weichmacher, Pigmente, Haftvermittler, insbesondere Organosilane, reaktive Bindemittel, Lösungsmittel, Rheologiemodifikatoren, Füllstoffe oder Fasern, insbesondere Glas-, Kohlenstoff-, Zellulose-, Baumwoll- oder synthetische Kunststofffasern, bevorzugt Fasern aus Polyester oder aus einem Homo- oder Copolymeren von Ethylen und/oder Propylen oder aus Viskose. Je nach Ausgestaltungsform der klebfreien Epoxid-Festharz-Schicht können die Fasern als Kurzfasern oder Langfasern, oder in Form von gesponnenen, gewobenen oder ungewobenen Faserwerkstoffen zum Einsatz kommen. Die Verwendung von Fasern ist insbesondere zur Verbesserung der mechanischen Verstärkung von Vorteil, insbesondere dann, wenn zumindest ein Teil der Fasern aus zugfesten oder hochzugfesten Fasern, insbesondere aus Glas, Kohlenstoff oder Aramide, bestehen.

Bevorzugt enthält die Epoxid-Festharz-Schicht 3 einen Anteil von 1 - 20 Gew.-% einer Epoxidverbindung, einen Anteil von 0.1 - 15 Gew.-% eines chemischen oder physikalischen Treibmittel, einen Epoxid-Vernetzungskatalysator und/oder Härter für Epoxidharze, welche durch eine Temperatur von 80°C bis 160 °C aktiviert werden und einen Anteil von einen Anteil von 40 - 90 Gew.-%Gew.-% eines festen thermoplastischen Polymers 4, insbesondere eines Ethylen/Vinylacetat-Copolymers, bezogen auf das Gesamtgewicht der Epoxid-Festharz-Schicht.

Die klebfreie Epoxid-Festharz-Schicht weist vorzugsweise eine Dicke von 0.1 - 5 mm, insbesondere 0.2 - 1 mm auf. Handelt es sich bei der klebfreien Epoxid-Festharz-Schicht um eine teilweise vorgeschäumte klebfreie Epoxid-Festharz-Schicht, so weist sie vorzugsweise eine Dicke von 1-10 mm, insbesondere 2-3 mm auf.

Zur Verstärkung der thermoplastischen Schottschicht 2, respektive der Abdichtungsmembran 1, kann die Abdichtungsmembran weiter noch einen Faserwerkstoff aufweisen. Ein solcher Faserwerkstoff ist typischerweise an der thermoplastischen Schottschicht angeordnet, vorzugsweise zwischen thermoplastischen Schottschicht und der klebfreie Epoxid-Festharz-Schicht. Es kann für die Abdichtfunktion der Abdichtungsmembran von Vorteil sein, wenn der Faserwerkstoff in die thermoplastische Schottschicht eingearbeitet ist.

Unter dem Begriff "Faserwerkstoff" ist im ganzen vorliegenden Dokument ein Werkstoff zu verstehen, welcher aus Fasern aufgebaut ist. Die Fasern umfassen oder bestehen aus organischem oder synthetischem Material. Insbesondere handelt es sich um Zellulose-, Baumwollfasern, Proteinfasern oder um synthetische Fasern. Als synthetische Fasern sind vor allem bevorzugt Fasern aus Polyester oder aus einem Homo- oder Copolymeren von Ethylen und/oder Propylen oder aus Viskose zu nennen. Die Fasern können hierbei Kurzfasern oder Langfasern, gesponnene, gewebte oder ungewebte Fasern oder Filamente sein. Weiterhin können die Fasern gerichtete oder gestreckte Fasern sein. Weiterhin kann es vorteilhaft sein, unterschiedliche Fasern, sowohl in Geometrie als auch Zusammensetzung, miteinander zu verwenden.

Der aus Fasern aufgebaute Körper kann auf die verschiedensten dem Fachmann bekannten Verfahren hergestellt werden. Insbesondere kommen Körper zum Einsatz, die ein Gewebe, Gelege oder Gewirke sind. Besonders bevorzugt als Faserwerkstoff ist ein Filz oder Vlies.

Es ist vorteilhaft, wenn die thermoplastische Schottschicht 2 und die klebfreie Epoxid-Festharz-Schicht 3 direkt miteinander verbunden sind. Unter "direktem Kontakt" wird verstanden, dass keine weitere Schicht oder Substanz zwischen zwei Werkstoffen vorliegt und dass die zwei Werkstoffe direkt miteinander verbunden sind, beziehungsweise aneinander haften. Am Übergang zwischen zwei Werkstoffen können die zwei Werkstoffe ineinander vermischt vorliegen. Die klebfreie Epoxid-Festharz-Schicht 3 kann vollflächig oder diskontinuierlich mit der thermoplastischen Schottschicht 2 verbunden sein.

Es ist weiter von Vorteil, wenn es sich bei Abdichtungsmembran 1 um eine flexible Membran, insbesondere um eine flexible Bahn, handelt. Diese kann einfach gerollt und somit einfach gelagert, beziehungsweise transportiert, werden. So gelangt die Abdichtungsmembran einfach auf die Baustelle und kann dort abgerollt und auf die benötigten Dimensionen abgeschnitten werden. Dies ist ein sehr kosten- und zeiteffizienter Arbeitsschritt. Grundsätzlich ist die Oberfläche einer Abdichtungsmembran klebfrei. Es kann aber dennoch von Vorteil sein, die Oberfläche der Abdichtungsmembran, insbesondere der klebfreien Epoxid-Festharz-Schicht, mit einem Trennpapier, beispielsweise einem silikonisierten Papier, zu schützen, um das allfällige Risiko, dass während der Lagerzeit die einzelnen Schichten einer Rolle miteinander verkleben, ausschliessen zu können.

Ein weiterer Aspekt der vorliegenden Erfindung betrifft ein Verfahren zum Abdichten eines Untergrunds 5 umfassend die Schritte:
(i) Aufbringen einer Abdichtungsmembran, wie sie vorgehend beschrieben ist, auf einen Untergrund 5, wobei die Seite der klebfreien Epoxid-Festharz-Schicht 3 dem Untergrund 5 zugewandt ist;
(ii) Erwärmen der klebfreien Epoxid-Festharz-Schicht 3 der Abdichtungsmembran 1, vorzugsweise auf eine Temperatur von 80 - 600 C°.

Bei dem Untergrund 5 handelt es sich vorzugsweise um ein Gebilde des Hoch- oder Tiefbaus, welche man gegen Feuchtigkeit und Wasser abdichten möchte. Er kann weiterhin das Erdreich, ein Bauwerk, ein Isolationsmaterial oder eine Schalung sein. Der Untergrund 5 kann dabei waagrecht sein oder auch nicht.

Insbesondere ist das Material des Untergrunds Holz, Metall, eine Metalllegierung, ein mineralisches Bindemittel wie Beton oder Gips, Kunststoff oder Wärmedämmmittel wie geschäumtes Polyurethan, Mineralwolle oder geschäumtes Glas (Foamglas).

Das Aufbringen der Abdichtungsmembran auf einen Untergrund 5 in Schritt (i) kann beispielsweise durch Abrollen der Abdichtungsmembran oder ein vollflächiges Verlegen der Abdichtungsmembran erfolgen. Aufgrund der Tatsache, dass die Oberfläche der Epoxid-Festharz-Schicht 3 klebfrei ist, kann die Abdichtungsmembran bis zum Erwärmen in Schritt (ii) bequem auf dem Untergrund (re-)positioniert werden.

Die Erwärmung kann auf jegliche Art und Weise erfolgen. Die Erwärmung kann durch externe oder durch interne Wärmequellen, wie einer exothermen chemischen Reaktion, erbracht werden. Vorzugsweise wird die Erwärmung in Schritt (ii) durch Heissluft, Beflammung, Ultraschall, Induktionsschweissen oder ein elektrisches Widerstandsheizelement ausgeführt.

Die klebfreie Epoxid-Festharz-Schicht 3 kann direkt erwärmt werden, beispielsweise durch Erwärmen der Oberfläche der der thermoplastischen Schottschicht abgewanden Seite der klebfreien Epoxid-Festharz-Schicht, insbesondere durch Heissluft oder Beflammung. Eine direkte Erwärmung ist auch durch ein elektrisches Widerstandsheizelement, beispielsweise mit einem in der klebfreien Epoxid-Festharz-Schicht angeordneten elektrischen Widerstandsheizelement, etwa einem Metallnetz, möglich.

Zusätzlich oder alternativ kann die klebfreie Epoxid-Festharz-Schicht 3 auch indirekt erwärmt werden, beispielsweise durch Erwärmen der Oberfläche der thermoplastischen Schottschicht, insbesondere durch Verschweissgeräte, Heissluft oder Beflammung. Eine indirekte Erwärmung ist auch durch Erwärmen des Untergrunds möglich, typischerweise durch Heissluft oder Beflammung.

Erfolgt die Erwärmung mittels Beflammung, so ist es vorteilhaft, wenn die Oberfläche der klebfreien Epoxid-Festharz-Schicht jeweils für 0.1 - 30 Sekunden, insbesondere 5 - 20 Sekunden, bevorzugt 10-15 Sekunden auf eine Temperatur von 400 C° - 600 C°, insbesondere 450 C° - 550 C°, insbesondere 480 C° - 520 C° erwärmt wird.

Die Erwärmung in Schritt (ii) kann zeitlich vor und/oder während und/oder nach dem Schritt (i) ausgeführt werden. Erfolgt die Erwärmung in Schritt (ii) zeitlich vor dem Schritt (i), erfolgt dies typischerweise kurz vor der Applikation in Schritt (i).

Beim Erwärmen der klebfreien Epoxid-Festharz-Schicht 3 schmilzt das enthaltene Epoxid-Festharz und/oder das gegebenenfalls enthaltene bei Raumtemperatur feste thermoplastische Polymer 4 und allenfalls andere schmelzbaren Komponenten der klebfreie Epoxid-Festharz-Schicht je nach deren Schmelzpunkt an oder auf. Falls sie aufschmelzen, können sie eine weitgehend homogene Schicht ausbilden und eine Grenzphasenschicht ausbilden. Falls die Epoxid-Festharz-Schicht ein chemisches oder physikalisches Treibmittel aufweist, wird beim Erwärmen in Schritt (ii) das Treibmittel aktiviert und es wird insbesondere ein Gas freigesetzt. Der so hergestellte Aufbau weist den wesentlichen Vorteil auf, dass ein lang andauernder Verbund unter den einzelnen Schichten untereinander gewährleistet ist.

Ein weiterer Aspekt der vorliegenden Erfindung betrifft die Verwendung der vorgängig im Detail beschriebenen Abdichtungsmembran 1 zur Abdichtung von Untergründen.

Die Abdichtungsmembran wird typischerweise als vorgefertigte Bahn verwendet. In diesem Fall wird die Abdichtungsmembran vorzugsweise durch einen industriellen Prozess in einem Folienwerk gefertigt und gelangt auf der Baustelle vorzugsweise in Form von einer Abdichtungsmembran ab einer Rolle zum Einsatz. Die Abdichtungsmembran kann jedoch auch in Form von Steifen mit einer Breite von typischerweise 1 - 20 cm zum Einsatz kommen, beispielsweise um Verbindungsstellen zwischen zwei Dachbahnen abzudichten. Weiter kann die Abdichtungsmembran auch in Form von flächigen Körpern zur Reparatur von schadhaften Stellen in Abdichtungen, beispielsweise Dachbahnen, vorliegen und verwendet werden.

Eine bevorzugte Verwendung der Abdichtungsmembran 1 ist daher eine Verwendung zum Abdichten gegen Feuchtigkeit von Bauten im Hoch- und Tiefbau, insbesondere von Dächern und Böden.

Ein weiterer Aspekt der vorliegenden Erfindung betrifft ein Verfahren zum Herstellung einer Abdichtungsmembran 1, wie sie vorgängig im Detail beschrieben wurde, wobei die thermoplastische Schottschicht 2 und/oder die klebfreie Epoxid-Festharz-Schicht 3 durch Kalandrieren und/oder Extrusion und/oder Co-Extrusion und/oder Kaschieren hergestellt werden.

Vorzugsweise wird die thermoplastische Schottschicht 2 durch Kalandrieren und/oder Co-Extrusion mit der klebfreien Epoxid-Festharz-Schicht 3 verbunden. Weiter kann die Abdichtungsmembran 1 als Endlosware hergestellt und beispielsweise auf Rollen aufgerollt werden.

Es kann weiter vorteilhaft sein, wenn bei der Herstellung die klebfreie Epoxid-Festharz-Schicht 3 teilweise geschäumt wird. Dies wird typischerweise durch physikalische und/oder chemische Treibmittel, wie sie vorgehend genannt wurden, erreicht, welche gegebenenfalls in der klebfreien Epoxid-Festharz-Schicht 3 enthalten sind.

In einem weiteren Aspekt betrifft die vorliegende Erfindung einen Formkörper, dessen Oberfläche eine Abdichtungsmembran aufweist, wobei die Abdichtungsmembran mit ihrer der thermoplastische Schottschicht abgewanden Seite an dem Formkörper angeordnet ist. Bei dem Formkörper handelt es sich typischerweise um ein Gebilde des Hoch- oder Tiefbaus. Unter dem Begriff "Formkörper" wird ein Gegenstand mit einer dreidimensionalen Ausdehnung bezeichnet.

### Kurze Beschreibung der Zeichnung

Im Folgenden werden anhand der Zeichnungen Ausführungsbeispiele der Erfindung näher erläutert. Gleiche Elemente sind in den verschiedenen Figuren mit den gleichen Bezugszeichen versehen.

Es zeigen:
- Fig. 1: einen Querschnitt durch einen Untergrund mit teilweise aufgebrachter Abdichtungsmembran (Situation während bzw. nach Schritt (ii));
- Fig. 2: einen Querschnitt durch einen Untergrund mit aufgebrachter Abdichtungsmembran (Situation während Schritt (ii));
- Fig. 3: einen Querschnitt durch einen Untergrund mit aufgebrachter Abdichtungsmembran (Situation während Schritt (ii));

Die Zeichnungen sind schematisch. Es sind nur die für das unmittelbare Verständnis der Erfindung wesentlichen Elemente gezeigt.

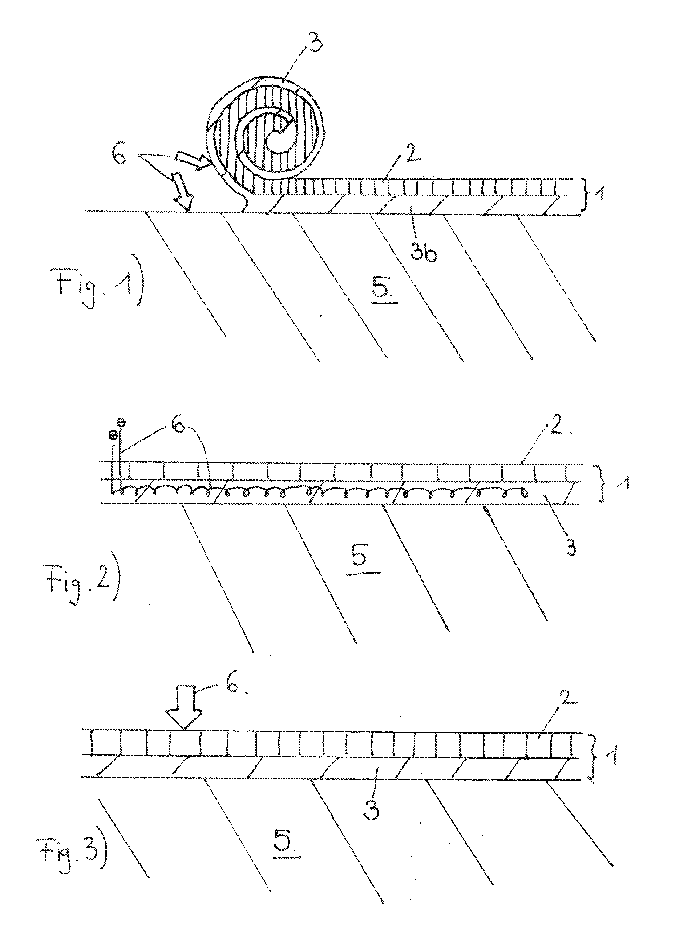

Figur 1 zeigt einen schematischen Querschnitt durch einen Untergrund mit teilweise aufgebrachter Abdichtungsmembran 1. Dargestellt ist die Situation während bzw. nach dem Erwärmen in Schritt (ii). Es ist einerseits eine indirekte Erwärmung durch eine Wärmequelle 6 dargestellt, wobei die Erwärmung durch Erwärmen des Untergrunds erfolgt, typischerweise durch Heissluft oder Beflammung. Die Pfeile sollen die Richtung der abgegebenen Wärme ausgehend von der Wärmequelle darstellen. Andererseits ist in Figur 1 auch eine direkte Erwärmung durch eine Wärmequelle dargestellt, welche typischerweise durch Heissluft oder Beflammung erfolgt. In der in Figur 1 dargestellten Situation erfolgen die Schritte (i) des Aufbringens der Abdichtungsmembran 1 sowie Schritt (ii) des Erwärmens der klebfreien Epoxid-Festharz-Schicht 3 im Wesentlichen zeitgleich. Die klebfreie Epoxid-Festharz-Schicht 3 umfasst ein Treibmittel, was in Figur 1 durch eine grössere Dicke der Epoxid-Festharz-Schicht nach dem Erwärmen 3b sichtbar ist. Aufgrund der Rollenform der Abdichtungsmembran kann nach einem anfänglichen Positionieren auf dem Untergrund die Abdichtungsmembran abgerollt und die Schritte (i) und (ii) ausgeführt werden.

Figur 2 zeigt einen schematischen Querschnitt durch einen Untergrund mit aufgebrachter Abdichtungsmembran 1. Dargestellt ist die Situation während dem Erwärmen in Schritt (ii), nach dem Aufbringen der Abdichtungsmembran auf dem Untergrund 5. Die direkte Erwärmung erfolgt durch ein elektrisches Widerstandsheizelement (Wärmequelle 6), welche in der klebfreien Epoxid-Festharz-Schicht 3 angeordnet ist.

Figur 3 zeigt einen schematischen Querschnitt durch einen Untergrund mit aufgebrachter Abdichtungsmembran 1. Dargestellt ist die Situation während dem Erwärmen in Schritt (ii), nach dem Aufbringen der Abdichtungsmembran auf dem Untergrund 5. Die indirekte Erwärmung erfolgt durch eine Erwärmungsvorrichtung 6, welche für einen Wärmeeintrag durch die Schottschicht 2 in die klebfreie Epoxid-Festharz-Schicht 3 sorgt. Durch den Pfeil dargestellt ist die Richtung der abgegebenen Wärme ausgehend von der Wärmequelle. Mögliche Wärmequellen sind beispielsweise Schweissvorrichtungen, Heissluft, Beflammung oder Ultraschall.

### Bezugszeichenliste

- 1: Abdichtungsmembran
- 2: Thermoplastische Schottschicht
- 3: klebfreie Epoxid-Festharz-Schicht
- 3b: Epoxid-Festharz-Schicht nach dem Erwärmen
- 5: Untergrund
- 6: Wärmequelle, respektive Richtung der abgegebenen Wärme ausgehend von der Wärmequelle

## Patentansprüche

1. Abdichtungsmembran (1) umfassend
• eine thermoplastische Schottschicht (2), insbesondere enthaltend thermoplastische Polyolefine oder Polyvinylchlorid (PVC),
• sowie eine klebfreie Epoxid-Festharz-Schicht (3).

2. Abdichtungsmembran gemäss Anspruch 1, **dadurch gekennzeichnet, dass** die thermoplastische Schottschicht (2) Materialien umfasst, welche ausgewählt sind aus der Gruppe bestehend aus Polyethylen mit hoher Dichte (HDPE), Polyethylen mit mittlerer Dichte (MDPE), Polyethylen mit tiefer Dichte (LDPE), Polyethylen (PE), Polypropylen (PP), Polyethylenterephthalat (PET), Polystyrol (PS), Polyvinylchlorid (PVC), Polyamide (PA), Ethylen-Vinylacetat (EVA), chlorsulfoniertes Polyethylen, thermoplastische Polyolefine (TPO), Ethylen-Propylen-Dien-Kautschuk (EPDM) und Polyisobutylen (PIB) sowie Mischungen davon.

3. Abdichtungsmembran gemäss Anspruch 1 oder 2, **dadurch gekennzeichnet, dass** das Epoxid-Festharz der klebfreien Epoxid-Festharz-Schicht (3) bei Raumtemperatur lagerstabil ist.

4. Abdichtungsmembran gemäss einem der vorhergehenden Ansprüche, **dadurch gekennzeichnet, dass** die klebfreie Epoxid-Festharz-Schicht (3) einen Anteil von 1 - 20 Gew.-%, insbesondere 2- 12 Gew.-%, bevorzugt 4- 9 Gew.-%, Epoxid-Festharz, bezogen auf das Gesamtgewicht der klebfreien Epoxid-Festharz-Schicht, aufweist.

5. Abdichtungsmembran gemäss einem der vorhergehenden Ansprüche, **dadurch gekennzeichnet, dass** die klebfreie Epoxid-Festharz-Schicht (3) ein chemisches oder physikalisches Treibmittel enthält.

6. Abdichtungsmembran gemäss einem der vorhergehenden Ansprüche, **dadurch gekennzeichnet, dass** die klebfreie Epoxid-Festharz-Schicht (3) weiter ein bei Raumtemperatur festes thermoplastisches Polymer (4) aufweist.

7. Abdichtungsmembran gemäss Anspruch 6, **dadurch gekennzeichnet, dass** das bei Raumtemperatur feste thermoplastische Polymer (4) einen Erweichungspunkt im Bereich von 60°C bis 150 °C, insbesondere von 80°C bis 150°C, aufweist.

8. Abdichtungsmembran gemäss Anspruch 6 oder 7, **dadurch gekennzeichnet, dass** das bei Raumtemperatur feste thermoplastische Polymer (4) ein Ethylen/Vinylacetat-Copolymer ist.

9. Abdichtungsmembran gemäss einem der Ansprüche 6 bis 8, **dadurch gekennzeichnet, dass** das Gewichts-Verhältnis von Epoxid-Festharz zu bei Raumtemperatur festem thermoplastischen Polymer (4) zwischen 1:2 und 1:10, bevorzugt zwischen 1:4 und 1:8, liegt.

10. Abdichtungsmembran gemäss einem der vorhergehenden Ansprüche, **dadurch gekennzeichnet, dass** die thermoplastische Schottschicht (2) und die klebfreie Epoxid-Festharz-Schicht (3) direkt miteinander verbunden sind.

11. Abdichtungsmembran gemäss einem der vorhergehenden Ansprüche, **dadurch gekennzeichnet, dass** die klebfreie Epoxid-Festharz-Schicht (3) eine Dicke von 0.1 - 5 mm aufweist.

12. Verfahren zum Abdichten eines Untergrunds (5) umfassend die Schritte
(i) Aufbringen einer Abdichtungsmembran (1) gemäss einem der Ansprüche 1 - 11 auf einen Untergrund (5), wobei die Seite der klebfreien Epoxid-Festharz-Schicht (3) dem Untergrund (5) zugewandt ist;
(ii) Erwärmen der klebfreien Epoxid-Festharz-Schicht (3) der Abdichtungsmembran (1), vorzugsweise auf eine Temperatur von 80 - 600 C°.

13. Verfahren zur Herstellung einer Abdichtungsmembran (1) gemäss einem der Ansprüche 1 - 11, **dadurch gekennzeichnet, dass** die thermoplastische Schottschicht (2) und/oder die klebfreie Epoxid-Festharz-Schicht (3) durch Kalandrieren und/oder Extrusion und/oder Co-Extrusion und/oder Kaschieren hergestellt werden.

14. Formkörper, dessen Oberfläche eine Abdichtungsmembran (1) gemäss einem der Ansprüche 1 - 11 aufweist, wobei die Abdichtungsmembran mit ihrer der thermoplastische Schottschicht abgewanden Seite an dem Formkörper angeordnet ist.
